# EUROPEAN PATENT APPLICATION

(11) **EP 1 187 285 A2**
(43) Date of publication of application: **13.03.2002**
(21) Application number: 01118018.9
(22) Date of filing: 25.07.2001
(51) Int. Cl.: H02G 3/12

(54) **Locking device particularly for retaining a plug-in supporting frame to be applied to a casing**

(30) Priority: 07.09.2000 IT MI001960
(71) Applicant: Gewiss S.P.A., 24069 Cenate Sotto (Bergamo) (IT)
(72) Inventor: Bosatelli, Domenico, 24069 Cenate Sotto (Bergamo) (IT)
(74) Representative: Forattini, Amelia

(57) **Abstract**

A locking device, particularly for retaining a plug-in supporting frame to be applied to a casing, including two claws biting into the lateral internal walls of the casing, each claw being coupled to a plate so that it can oscillate and being mounted on an actuation screw which can be accessed from the front on the frame. Each of the claw/plate assemblies can be arranged in seats formed by the frame, depending on the depth of the installation receptacle of the casing; the seats being arranged at different distances along the direction of the depth of the casing.

## Description

The present invention relates to a locking device particularly for retaining a plug-in supporting frame to be applied to a casing.

Telephone and electrical plug-ins for civil use are usually constituted by a frame which supports a plug-in provided with electrical connectors for providing electrical and telephone connections and is often adapted to receive a plug. The frame is applied to a casing, which is usually recessed in the wall and through which the cables used to provide the connections pass. The frame is usually fixed to the casing by means of locking devices constituted by claws actuated by screws. The screws are accessible from the front on the frame and, by opening out against the walls of the casing, lock the plug-in supporting frame in position.

In some locking devices, depending on the depth of the installation receptacle that contains the casing, it is possible to fit each claw at two alternative seats on the frame. One of the seats is arranged further toward the inside of the casing with respect to the other. However, these locking devices have the drawback that each of these two seats requires a specific claw which can be used only if it is placed in the seat for which it is meant.

An aim of the present invention is to provide an improved locking device with respect to currently commercially available devices, for retaining a plug-in supporting frame to be applied to a casing.

An object of the present invention is to provide a locking device which can be adapted to installation receptacles having different depths by using the same claws.

A further object of the present invention is to provide a locking device in which the claws are simple to manufacture and can be easily assembled to the frame.

This aim, these objects and others which will become better apparent hereinafter are achieved by a locking device, particularly for retaining a plug-in supporting frame to be applied to a casing, comprising at least two claws which are adapted to bite into the lateral internal walls of the casing, each claw being coupled to a plate so that it can oscillate and being mounted on an actuation screw which can be accessed from the front on the frame, characterized in that each of the claw/plate assemblies can be arranged in seats formed by the frame depending on the depth of the installation receptacle of the casing, the seats being arranged at different distances along the direction of the depth of the casing.

Further characteristics and advantages of the invention will become better apparent from the description of preferred but not exclusive embodiments thereof, illustrated only by way of non-limitative example in the accompanying drawings, wherein:
Figure 1 is a sectional side elevation view of a locking device according to the invention, illustrating the claw/plate assembly in the upper position;
Figure 2 is a view, similar to Figure 1, of the claw/plate assembly according to the invention in the lower position;
Figure 3 is a perspective view of the claw/plate assembly according to the invention.

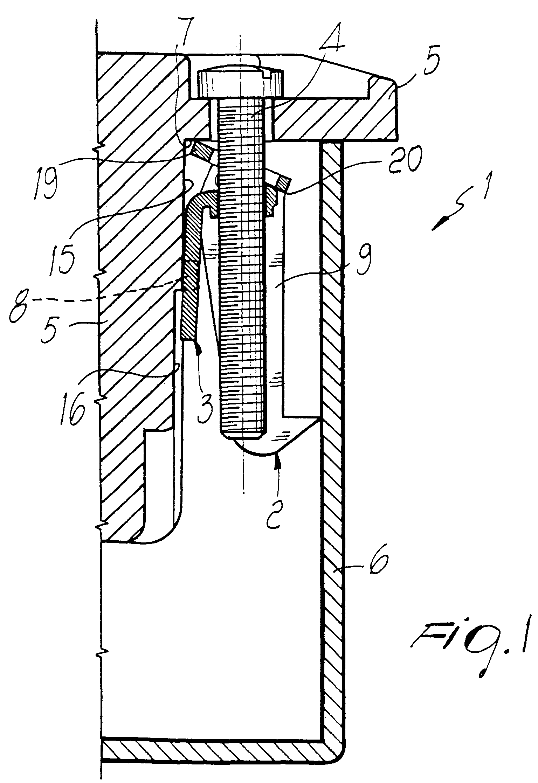

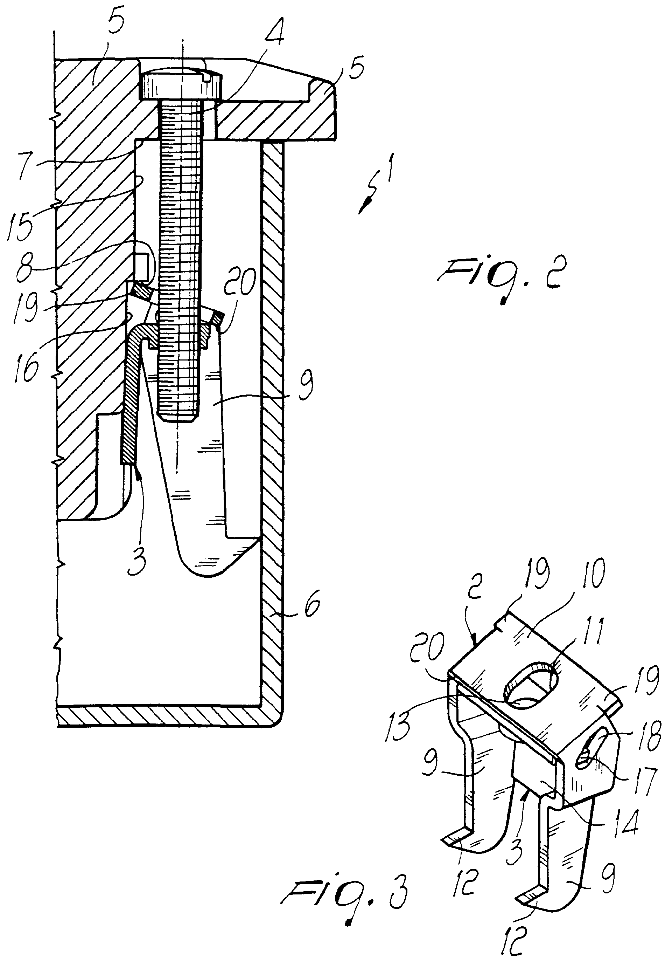

With reference to the above cited figures, the locking device, particularly for retaining a plug-in supporting frame to be applied to a casing, generally designated by the reference numeral 1, comprises a locking claw 2 and a plate 3 provided with a threaded hole and an actuation screw 4 onto which the plate 3 is screwed. The claw and the plate are hinged so as to mutually oscillate. The actuation screw 4 is arranged, in a frontally accessible position, on a plug-in supporting frame 5 which is adapted to be applied to a casing 6 in order to close it.

The claw/plate assembly can be arranged at a first upper abutment step 7 which is formed in the plug-in supporting frame 5, which constitutes the fulcrum that allows the locking claw 2 to move toward the walls of the casing 6, in cooperation with the movement of the plate 3, so as to screw onto the actuation screw 4, so as to lock the frame 5 to the casing 6. This position of the claw/plate assembly is termed upper position.

According to the invention, a second lower abutment step 8, on the plug-in supporting frame 5, allows to position the claw/plate assembly at a greater distance from the head of the actuation screw 4 in order to obviate the possible greater depth of the receptacle in which the casing 6 is installed. This additional position of the claw/plate assembly is termed lower position.

The arrangement of the claw/plate assembly at the second abutment step 8 can be achieved by loosening the actuation screw 4 and making the claw 2 and the plate 3, rigidly coupled thereto, slide until the new position is reached. Clearly, the actuation screw 4 must have an adequate length.

The locking claw 2 has two symmetrical lateral teeth 9 which protrude from a connection surface 10 in which there is a central hole 11 which allows the loose insertion of the actuation screw 4. Each tooth 9 has a hook-shaped profile 12 proximate to its end. The hook-shaped profile engages inside the casing 6 so as to lock the frame 5 in position.

The plate 3 is provided with a threaded hole 13 which allows the engagement of the actuation screw 4 and with a contrast portion 14 which is adapted to slide along a first plane 15 of the frame 5, when the claw/plate assembly is in the upper position, and a second plane 16 of the frame 5, when the claw/plate assembly is in the lower position. The plate 3 is pivoted to the locking claw 2 by means of teeth 17 which engage in slots 18 formed in the teeth 9 of the claw 2. In this manner, the plate 3 and the claw 2 are not rigidly coupled and they can oscillate with respect to each other, in the proposed example, through 30 degrees.

When the claw/plate assembly is fitted on the frame 5, by means of the actuation screw 4, the claw 2 has a rear edge 19 of the connection surface 10 which abuts against one of the two abutment steps 7 and 8 constituting the fulcrum that allows the oscillation of the claw 2, in cooperation with the plate 3, toward the wall of the casing 6. A front edge 20 of the surface 10 of the claw 2 ensures contact with the plate 3, so as to constantly transfer the motion of the plate 3, during screwing to the claw. In the normal active configuration, the teeth 9 of the claw 2 are arranged so as to allow the application and extraction of the plug-in supporting frame 5 on the casing 6 without locking the body.

In order to fix the frame 5 to the casing 6, it is sufficient to operate the screw 4 so as to act on the plate 3 which, by screwing on, moves toward the head of the screw 4. The motion is transferred to the claw 2 through the front edge 20. A moment is thus generated, also by virtue of the contrast applied by the step 7 or 8 to the rear edge 19 of the claw 2. The moment makes the claw 2 oscillate, moving the hook-shaped profiles 12 of the teeth 9 so that they engage the walls of the casing 6. The teeth 9 apply considerable force to the wall of the casing 6, becasue the claw 2 is pushed effectively by the plate 3, which levers against the plane 15 or 16 of the frame 5 along which the contrast portion 14 of the plate 3 slides.

In practice it has been observed that the invention achieves the intended aim and objects, a locking device particularly for retaining a plug-in supporting frame to be applied to a casing having been provided in which the same claws can be arranged easily and rapidly on the same frame in different positions depending on the depth of the installation receptacle of the casing.

The locking device according to the present invention allows to move the two parts, i.e. the claw and the plate, as if they were a single part, while having the functional advantages of the two individual parts.

The device according to the invention is susceptible of numerous modifications and variations, within the scope of the appended claims. All the details may be replaced with technically equivalent elements.

The materials employed, as well as the dimensions, may of course be any according to requirements and to the state of the art.

## Claims

1. A locking device, particularly for retaining a plug-in supporting frame to be applied to a casing, comprising at least two claws adapted to bite into the lateral internal walls of said casing, each claw being coupled to a plate so that it can oscillate and being mounted on an actuation screw which can be accessed from the front on said frame, **characterized in that** each of said claw/plate assemblies can be arranged in seats formed by said frame depending on the depth of the installation receptacle of said casing, said seats being arranged at different distances along the direction of the depth of said casing.

2. The locking device according to claim 1, **characterized in that** said seats form a first abutment step and a second abutment step, for each of said claw/plate assemblies, said steps being formed on said plug-in supporting frame and constituting the fulcrum that allows said locking claws to oscillate toward the walls of said casing, in cooperation with the motion of said plates as they are screwed onto said actuation screws, locking said frame to said casing.

3. The locking device according to claim 1 or 2, **characterized in that** said second abutment step allows to position the claw/plate assembly at a greater distance from the head of said actuation screw with respect to the position assumed at said first abutment step.

4. The locking device according to one or more of the preceding claims, **characterized in that** said claw/plate assembly can be arranged at said second abutment step by loosening said actuation screw and by making said claw and said plate, rigidly coupled thereto, slide until the new position is reached, said actuation screw having an adequate length.

5. The locking device according to one or more of the preceding claims, **characterized in that** each of said locking claws comprises two symmetrical lateral teeth which protrude from a connection surface in which there is a central hole in which said actuation screw engages loosely, each tooth forming, proximate to its end, a hook-shaped profile which engages inside said casing, locking the frame in position.

6. The locking device according to one or more of the preceding claims, **characterized in that** each of said plates is provided with a threaded hole which allows the screwing of said actuation screw and with a contrast portion which is adapted to slide along a first plane of said frame, when the claw/plate assembly is located at said first abutment step, and along a second plane of said frame, when the claw/plate assembly is located at said second abutment step.

7. The locking device according to one or more of the preceding claims, **characterized in that** said plate is pivoted to said locking claw by means of teeth which engage in slots formed in said teeth of said claw, said plate and said claw being coupled nonrigidly and being able to oscillate with respect to each other.

8. The locking device according to one or more of the preceding claims, **characterized in that** said claws, mounted on said frame, form a rear edge which abuts against one of said two abutment steps and a front edge which ensures contact with said plate so as to constantly transfer the movement of said plate, during screwing, to said claw.

9. The locking device according to one or more of the preceding claims, **characterized in that** the motion of said plate toward said claw, together with the contrast of one of said abutment steps with said rear edge of said claw, generates a moment which forces said claw to oscillate, moving said hook-shaped profiles of said teeth so that they engage the walls of said casing.
